# EUROPÄISCHE PATENTSCHRIFT

(11) **EP 3 815 355 B1**
(45) Veröffentlichungstag und Bekanntmachung des Hinweises auf die Patenterteilung: **06.05.2026**
(21) Anmeldenummer: 19749188.9
(22) Anmeldetag: 26.06.2019
(51) Int. Cl.: H04N 7/14

(54) **PRÄSENTATIONSSYSTEM UND PRÄSENTATIONSVERFAHREN**
PRESENTATION SYSTEM AND PRESENTATION METHOD
SYSTÈME DE PRÉSENTATION ET PROCÉDÉ DE PRÉSENTATION

(30) Priorität: 26.06.2018 DE 102018115302
(43) Veröffentlichungstag der Anmeldung: 05.05.2021
(73) Patentinhaber: Universität Kassel, 34125 Kassel (DE)
(72) Erfinder: SINGER, Kilian Talo Theodor, 34134 Kassel (DE); DAWKINS, Samuel Thomas, 55283 Nierstein (DE)
(74) Vertreter: Kleine, Hubertus
(86) Internationale Anmeldenummer: PCT/EP2019/066983
(87) Internationale Veröffentlichungsnummer: WO 2020/002421

(56) Entgegenhaltungen:
- EP-A1- 0 581 221
- US-A1- 2010 188 478
- US-A1- 2012 224 019
- US-A1- 2016 227 164

## Beschreibung

Die Erfindung betrifft ein Präsentationssystem zur gemeinsamen Darstellung eines Monitorbilds und eines mit einer Videokamera aufgenommenen Kamerabilds eines Vortragenden durch ein Wiedergabesystem, wobei das Monitorbild und das Kamerabild in einem Mischer zur Darstellung durch das Wiedergabesystem überlagert werden. Dabei ist ein Monitor mit einem Display vorhanden, um das Monitorbild für einen sich vor dem Monitor befindenden Vortragenden darzustellen, wobei vor dem Display ein teildurchlässiger Spiegel angeordnet ist, und wobei die mindestens eine Videokamera so positioniert ist, dass sie den Vortragenden gespiegelt über den teildurchlässigen Spiegel erfasst. Die Erfindung betrifft weiterhin ein Verfahren, um ein Kamerabild, das mit einer Videokamera von einem Vortragenden aufgenommen wird, gemeinsam mit einem Monitorbild mit einem Wiedergabesystem darzustellen.

Bei Vorträgen vor einem größeren Publikum wird der Vortragende oft mit einer Videokamera aufgenommen und das von der Videokamera erfasste Bild wird mit einem Wiedergabesystem, z. B. einem Beamer mit zugeordneter Leinwand, dargestellt. In einer typischen Vortrags- oder auch Vorlesungssituation nimmt der Vortragende dabei häufig Bezug auf ein Monitorbild, das z.B. Texte oder Grafiken umfasst. Das Monitorbild wird in der Regel dem Auditorium computergestützt mit Hilfe eines separaten Wiedergabesystems oder als Hinter- oder Vordergrundgrundbild auf dem genannten Wiedergabesystem zusammen mit dem Vortragenden gezeigt.

Wenn sich der Vortragende zu dem Wiedergabesystem dreht, um Bezug zu dem Monitorbild zu nehmen, kehrt er seinem Auditorium den Rücken zu und verliert entsprechend den Kontakt mit seinem Auditorium. Um dieses zu verhindern, nutzen Vortragende oft einen weiteren Monitor, z. B. in Form eines Laptops, der vor Ihnen steht, so dass sie selbst das Monitorbild sehen und dabei dem Auditorium zugewandt sein können. Blickt der Vortragende jedoch auf diesen Monitor, kann er nicht gleichzeitig in die Kamera schauen, wodurch sich eine irritierende Darstellung des Vortragenden zusammen mit dem Monitorbild auf dem Wiedergabesystem ergibt. Dieser Effekt tritt besonders deutlich zu Tage, wenn das Monitorbild nicht statisch ist, sondern z. B. durch eine Touchscreen-Eingabe oder die Benutzung eines digitalen Zeichenstifts auf dem Monitor des Vortragenden beim Vortrag verändert bzw. entwickelt wird.

Eine ähnliche Situation ergibt sich bei Studio-Fernsehübertragungen, wenn ein Moderator einerseits in die Kamera blicken soll und andererseits auf etwas weisen soll, das hinter oder vor ihm entweder real angeordnet ist oder gar nur für den Zuschauer eingeblendet wird, wie beispielsweise eine Wetterkarte.

Ebenso vergleichbar hiermit ist die Situation einer Videokonferenz, bei der ein Teilnehmer auf das Bild des entfernten Teilnehmers auf einen Monitor schaut und dabei von einer Kamera aufgenommen wird, die neben dem Monitor angeordnet ist. Schaut der Teilnehmer auf den Monitor, sieht er seinen Gesprächspartner - dieser hat jedoch nicht das Gefühl, dass der Teilnehmer zu ihm Blicckontakt aufnimmt. Dieses Gefühl hat der Gesprächspartner nur dann, wenn der Teilnehmer in die Kamera schaut - dann wiederum sieht er seinen Gesprächspartner auf dem Monitor nicht.

Ein solches Präsentationssystem kann auch im Rahmen einer Videokonferenz genutzt werden, um in interaktiver Weise gemeinsam an einem Dokument zu arbeiten. In dem Fall ist das Präsentationssystem mindestens zweifach vorhanden, wobei jedem Konferenzteilnehmer eine Kamera und ein Monitor zugeordnet sind und wobei der Monitor gleichzeitig als Wiedergabesystem für das Kamerabild des mindestens einen anderen Konferenzteilnehmers dient. Auch hierbei ergibt sich das Problem des fehlenden Blickkontakts.

Aus der Druckschrift US 2004/0196359 A1 ist eine Anordnung zur Durchführung von Videokonferenzen bekannt, bei der der Teilnehmer der Videokonferenz das Bild seines Gesprächspartners über einen halbdurchlässigen gekrümmten Spiegel betrachtet, während die ihn aufzeichnende Kamera hinter dem Spiegel angeordnet ist und zumindest das Gesicht des Teilnehmers durch den Spiegel aufzeichnet.

Die Verwendung des gekrümmten Spiegels ermöglicht es, den Monitor seitlich vor dem Teilnehmer zu positionieren, so dass der Monitor nicht auf der optischen Achse der Kamera liegt und somit den Blick der Kamera auf das Gesicht des Vortragenden nicht verstellt. Dennoch scheint für den Teilnehmer das Abbild des Monitors aus der Richtung der Kamera zu kommen, so dass er beim Blick auf den Monitor auch in die Kamera blickt. Der Monitor weist bei dieser Anordnung jedoch nicht auf den Teilnehmer zu, so dass dieser beispielsweise nicht interaktiv auf dem Monitor agieren kann, beispielsweise eine Touchfunktion des Monitors nicht nutzen kann bzw. nicht mit einem digitalen Zeichenstift auf dem Monitor agieren kann.

Die Druckschrift DE 11 2010 001 819 T5 beschreibt ein Videokonferenzsystem, bei dem ein Vortragender vor einer teiltransparenten Anzeigefläche steht, auf deren Rückseite das Monitorbild projiziert wird und durch die der Vortragende von der Kamera aufgenommen wird. Nachteilig ist dabei die Baugröße des Systems, die der rückseitigen Projektion des Monitorbildes auf die Anzeigefläche geschuldet ist.

Aus der Druckschrift US 9,270,933 B1 ist ein System der eingangs beschriebenen Art bekannt, das eine Videokonferenz ermöglicht, bei dem ein Teilnehmer so erfasst wird, dass er beim Blick auf ein Monitorbild gleichzeitig in eine Kamera schaut. Dieses wird erreicht, indem der Monitor eine spiegelnde Oberfläche hat und der Teilnehmer von der Kamera von dieser Oberfläche reflektiert aufgenommen wird. Um in der Kameraaufnahme das Bild des Teilnehmers von dem des Monitors trennen zu können, wird der Monitor periodisch wiederkehrend kurzzeitig dunkel geschaltet, wobei nur die Kameraaufnahme während der Dunkelschaltung weiterverarbeitet wird. Die Zeitdauer der Dunkelschaltung wird dabei so kurz gewählt, dass sie für den Teilnehmer nicht in einem flackernden Monitorbild resultiert. Nachteilig bei dem System ist jedoch, dass aufgrund der sehr kurzen Zeiten für die Kameraaufnahmen eine hohe Kameraempfindlichkeit benötigt wird, die zu einem verrauschten Bild führen kann oder der Teilnehmer mit hoher Lichtintensität beleuchtet werden muss, was zu Blendungen führen kann. Ein weiterer Nachteil liegt darin, dass sich vorhandene Monitore, z.B. ein Bildschirm eines Laptops, nicht ohne weiteres und ohne Hardwareeingriff in der benötigten schnelle Folge dunkeltasten lassen, so dass das Verfahren nur mit eigens dafür eingerichteten Monitorsystemen durchgeführt werden kann.

Aus der Druckschrift US 2016/0227164 A1 ist ein elektronisches System bekannt, das eine reflektierende Folie mit einem Beugungsgitter umfasst, das dazu eingerichtet ist, ein Bild innerhalb eines Reflexionsgitterspektrums unter einem Reflexionswinkel zu reflektieren, und das eine Bildaufnahmeeinheit umfasst, die in einer Geräteausrichtung positioniert ist, um das von der reflektierenden Folie reflektierte Bild zu erfassen.

Aus der Druckschrift US 2012/0224019 A1 ist ein Verfahren zum Modifizieren eines Bildes in einem Video bekannt, das den Schritt des Erfassens eines Bildes im sichtbaren Lichtspektrum eines Bereichs umfasst, wobei das Bild im sichtbaren Licht mit einer ersten Bildrate erfasst wird. Das Verfahren umfasst ferner den Schritt des Erfassens eines entsprechenden Infrarotbildes des Bereichs, wobei das Infrarotbild erfasst wird, wenn der Bereich mit einer Infrarotlichtquelle beleuchtet wird, und das Infrarotbild mit im Wesentlichen derselben Bildrate erfasst wird wie das Bild im sichtbaren Licht. Auf der Grundlage des Infrarotbildes wird zumindest eine Untermenge der menschlich wahrnehmbaren Merkmale des erfassten Bildes im sichtbaren Licht modifiziert.

Es ist eine Aufgabe der vorliegenden Erfindung ein kompaktes Präsentationssystem bzw. ein Präsentationsverfahren der eingangs genannten Art zu schaffen, bei denen ein Vortragender einen Monitor betrachten und auch die Fläche des Monitors interaktiv, z. B. mit einem digitalen Zeichenstift nutzen kann, und gleichzeitig der Vortragende so von einer Kamera erfasst werden kann, dass er beim Blick auf den Monitor in die Kamera blickt. Dabei soll das System auf einfache Weise bei einem bestehenden Monitor nachrüstbar sein, ohne in dessen Hardware eingreifen zu müssen. Von zusätzlicher Bedeutung ist dass, der Zuschauer nachvollziehen kann, wohin der Vortragende auf dem Bildschirm schaut und zeigt.

Diese Aufgabe wird durch ein Präsentationssystem und ein Präsentationsverfahren mit den Merkmalen des jeweiligen unabhängigen Anspruchs gelöst. Vorteilhafte Ausgestaltungen und Weiterbildungen sind Gegenstand der abhängigen Ansprüche.

Ein erfindungsgemäßes Präsentationssystem der eingangs genannten Art zeichnet sich dadurch aus, dass die mindestens eine Videokamera eine Infrarotkamera ist.

Durch Verwendung der Infrarotkamera, bevorzugt in Kombination mit einer Infrarotausleuchtung der Szene, d.h. des Vortragenden, tritt das Monitorbild im Kamerabild nicht oder nur in vernachlässigbarer Intensität auf. Gleichzeitig ergibt sich ein optimaler Eindruck für den Betrachter des Monitors, da er nicht durch Reflexionen seines eigenen Bildes irritiert wird. Dieser Effekt kann durch zusätzliche Verwendung einer Bildschirmfolie o.ä. auf dem Monitor, welche bevorzugt Infrarotstrahlung reflektiert, für das sichtbare Licht jedoch durchlässig ist, noch erhöhen. Ansonsten ist eine Modifikation des Monitors anders als z.B. bei der aus dem Stand der Technik bekannten zeitweisen Dunkeltastung des Monitors nicht erforderlich.

Durch die Verwendung einer Infrarotkamera kann der Vortragende und seine Umgebung ausreichend ausgeleuchtet werden, ohne dass der Vortragende durch die Lichtquellen selbst oder durch Spiegelungen der Lichtquellen oder der ausgeleuchteten Umgebung auf dem Monitor gestört wird.

Als Infrarotkamera ist dabei im Rahmen der Anmeldung eine Videokamera anzusehen, deren Intensität im Infrarot-Wellenlängenbereich, d.h. bei Wellenlängen größer als etwa 780 Nanometern (nm), signifikant höher ist als im Bereich des sichtbaren Lichts, d.h. bei Wellenlängen im Bereich von etwa 400-750 nm. Diese Empfindlichkeitsverteilung kann z.B. durch entsprechende Sensoren der Videokamera und/oder vorgesetzte Filter erreicht werden.

Durch die Aufnahme des Vortragenden gespiegelt im Monitor blickt der Vortagende sowohl auf die Informationen auf dem Monitor, als auch in Richtung der Kamera. Da der Vortragende nicht durch den Monitor von der Videokamera aufgenommen wird, kann ein üblicher Monitor eingesetzt werden, der einen flachen und kompakten Aufbau aufweist.

In einer vorteilhaften Ausgestaltung des Präsentationssystems ist der teildurchlässige Spiegel parallel zu dem Display flächig auf dieses aufgesetzt. Er kann z.B. als ein Schutzglas für das Display in den Monitor integriert sein. Bevorzugt weist der teildurchlässige Spiegel zudem eine berührungsempfindliche Sensoroberfläche auf, wodurch der Monitor als "Touchscreen" verwendet werden kann, beispielsweise um interaktiv auf dem Monitor zu zeichnen. Das Präsentationssystem kann dann als Wandtafel oder "Whiteboard" genutzt werden.

In einer weiteren vorteilhaften Ausgestaltung des Präsentationssystems ist vor der mindestens einen Videokamera ein Polfilter angeordnet. Bevorzugt ist in dem Fall zwischen dem Display des Monitors und dem teildurchlässigen Spiegel ein Polarisator, insbesondere eine sich flächig über das gesamte Display erstreckende Polfilterfolie, angeordnet. Alternativ dazu kann auch ein Monitor eingesetzt werden, der bedingt durch sein Funktionsprinzip polarisiertes Licht abstrahlt. Polfilter vor der Videokamera, welcher das inhärent oder aufgrund des vor dem Monitor vorgesetzten Polarisators polarisierte Licht blockiert, wird erreicht, dass vom Monitor emittiertes Licht die Videokamera nicht erreicht. Das Monitorbild, das der Vortragende sieht, ist dadurch im Kamerabild nicht sichtbar. Der Polfilter vor der Videokamera und der Polarisator können beispielsweise gekreuzte Polarisationsebenen aufweisen, wenn eine lineare Polarisation des Lichts zum Ausblenden des Monitorbilds eingesetzt wird. Alternativ kann ein Ausblenden des Monitorbilds auch über eine zirkulare oder elliptische Polarisation erfolgen.

In einer dazu alternativen Ausgestaltung des Präsentationssystems ist zwischen dem Display des Monitors und dem teildurchlässigen Spiegel ein Farbfilter oder ein Blickwinkelfilter angeordnet. Auch auf diese Weise kann das Monitorbild im Kamerabild weiter unterdrückt werden. Auch ist eine zusätzliche Unterdrückung des Monitorbildes in einer Zeitdomäne möglich, beispielsweise indem die Darstellungen auf dem Monitor stroboskopisch erfolgen, z.B. über einen schaltbaren Spiegel. Während der Zeiten, in denen das Monitorbild sichtbar ist, wird die Videokamera elektrisch durch einen elektronischen Kameraverschluss ausgetaktet, oder es wird das Monitorbild durch einen schaltbaren Transmissionsfilter, der vor der Videokamera angeordnet ist, optisch ausgeblendet.

In einer weiteren vorteilhaften Ausgestaltung umfasst das Präsentationssystem einen Steuerungsrechner mit einer Bildverarbeitungseinheit, die eine Echtzeit-Bildverarbeitung zur Entzerrung des Kamerabilds ermöglicht, wobei ein modifiziertes Kamerabild an den Mischer weitergeleitet wird. Durch die Bildverarbeitungseinheit kann eine durch die Winkelstellung der Kamer zum Monitor entstandene Verzerrung des Kamerabilds in Echtzeit korrigiert werden, so dass im Wiedergabesystem sowohl das Monitorbild, als auch der Vortragende korrekt zueinander positioniert wiedergegeben werden. Das ist insbesondere dann relevant, wenn der Vortragende auf den Monitor blickt oder zeigt, um auch dem Ausgabebild korrekt entnehmen zu können, wohin der Vortragende blickt bzw. zeigt. In einer weiteren Ausgestaltung kann alternativ oder zusätzlich dazu das Monitorbild, das der Vortragende sieht, vorverzerrt werden, so dass sich auch so wieder eine Deckungsgleichheit der beiden Bilder (Monitorbild und Kamerabild) im Ausgabebild ergibt.

In einer weiteren vorteilhaften Ausgestaltung ist das Präsentationssystem so ausgebildet, dass das modifizierte Kamerabild über ein Netzwerk an einen entfernten Mischer weitergeleitet wird. Der entfernte Mischer ist bevorzugt mit einem entfernten Monitor verbunden. Dieser sich entfernt vom Vortragenden befindende Monitor fungiert einerseits als Wiedergabesystem und ist andererseits Teil eines weiteren Präsentationssystems, wodurch das Präsentationssystem als Videokonferenzsystem einsetzbar ist.

In einer weiteren vorteilhaften Ausgestaltung des Präsentationssystems ist in einem Strahlengang zwischen der mindestens einen Videokamera und dem teildurchlässigen Spiegel mindestens ein weiterer Spiegel angeordnet, wobei der Vortragende gespiegelt über den mindestens einen weiteren Spiegel und über den teildurchlässigen Spiegel von der mindestens einen Videokamera erfasst wird. Durch den mindestens einen weiteren Spiegel wird eine größere Flexibilität in der Positionierung der Videokamera erreicht.

In der Ausgestaltung des Präsentationssystems gemäß der beanspruchten Erfindung ist eine weitere Kamera vorhanden und angeordnet, ein Farbbild des Vortragenden aufzunehmen, anhand dessen eine Farbeinfärbung des Kamerabilds und/oder des Monitorbilds vorgenommen werden kann. Auf diese Weise kann das ansonsten schwarz/weiß bzw. in Graustufen wiedergegebene Infrarotbild des Vortragenden wieder eingefärbt werden, um eine natürliche Farbwiedergabe zu ermöglichen. Die weitere Kamera ist gemäß der beanspruchten Erfindung direkt, d.h. nicht in Reflexionsgeometrie auf den Vortragenden gerichtet. Das Einfärben kann sich dabei Algorithmen der künstlichen Intelligenz bedienen, insbesondere selbstlernenden Algorithmen. In einer nicht von den Ansprüchen erfassten alternativen Ausgestaltung kann anstelle des weiteren Kamerabildes auch ein statisches Farbbild eingesetzt werden, dessen Farben dann auf das bewegte Infrarotbild übertragen werden.

Bei einem erfindungsgemäßen Präsentationsverfahren erfasst mindestens eine Videokamera einen Vortragenden gespiegelt über einen vor einem Display eines Monitors, auf dem ein Monitorbild angezeigt wird, angeordneten halbdurchlässigen Spiegel in einem Kamerabild in einem Infrarot-Wellenlängenbereich. Das Kamerabild wird dann in Echtzeit durch eine Bildverarbeitungseinheit modifiziert und/oder das Monitorbild vor seiner Darstellung auf dem Monitor verzerrt wird. Das ggf. verzerrte Monitorbild und das modifizierte Kamerabild werden in einem Mischer zur Darstellung durch das Wiedergabesystem überlagert. Es ergeben sich die im Zusammenhang mit dem Präsentationssystem genannten Vorteile.

In einer vorteilhaften Weiterbildung des Präsentationsverfahrens werden in dem Schritt des Modifizierens das Kamerabild verzerrt und/oder es erfolgt eine Randbeschneidung und/oder eine Ausschnittvergrößerung und/oder eine Positionskorrektur und/oder Rotationskorrektur und/oder Spiegelung.

In einer weiteren vorteilhaften Weiterbildung des Präsentationsverfahrens umfasst das Wiedergabesystem einen Monitor eines weiteren Präsentationssystems. Es wird so das Monitorbild und das damit überlagerte modifizierte Kamerabild des Vortragenden (in dem Fall als Teilnehmer bezeichnet) als Monitorbild auf einem Monitor dargestellt, der seinerseits von einem weiteren Teilnehmer als Teile des weiteren Präsentationssystems genutzt wird. Dessen Kamerabild wird auf vergleichbare Weise dann dem Monitorbild des erstgenannten Teilnehmers überlagert, so dass die Anordnung der beiden Präsentationssysteme die Durchführung einer Videokonferenz ermöglicht.

Die Erfindung wird nachfolgend anhand von Ausführungsbeispielen mit Hilfe von Figuren näher erläutert. Die Figuren zeigen:
- Fig. 1: eine schematische Darstellung eines Präsentationssystems zur Durchführung eines Präsentationsverfahrens;
- Fig. 2: Details zur Anordnung einiger Komponenten des in Fig. 1 gezeigten Präsentationssystems;
- Fig. 3: eine schematische Darstellung des Präsentationsverfahrens, das beispielsweise mit dem Präsentationssystem der Fig. 1 durchgeführt werden kann; und
- Fig. 4: eine schematische Darstellung eines zur Durchführung von Videokonferenzen ausgebildeten Präsentationssystems.

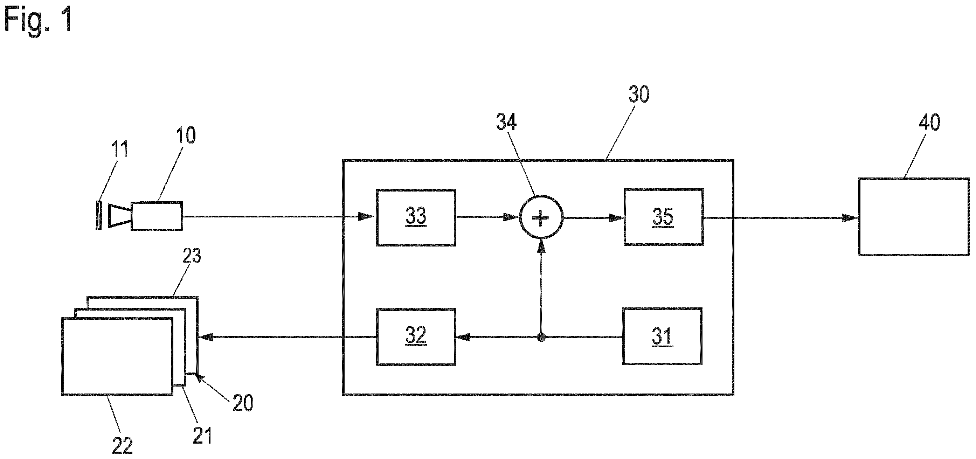

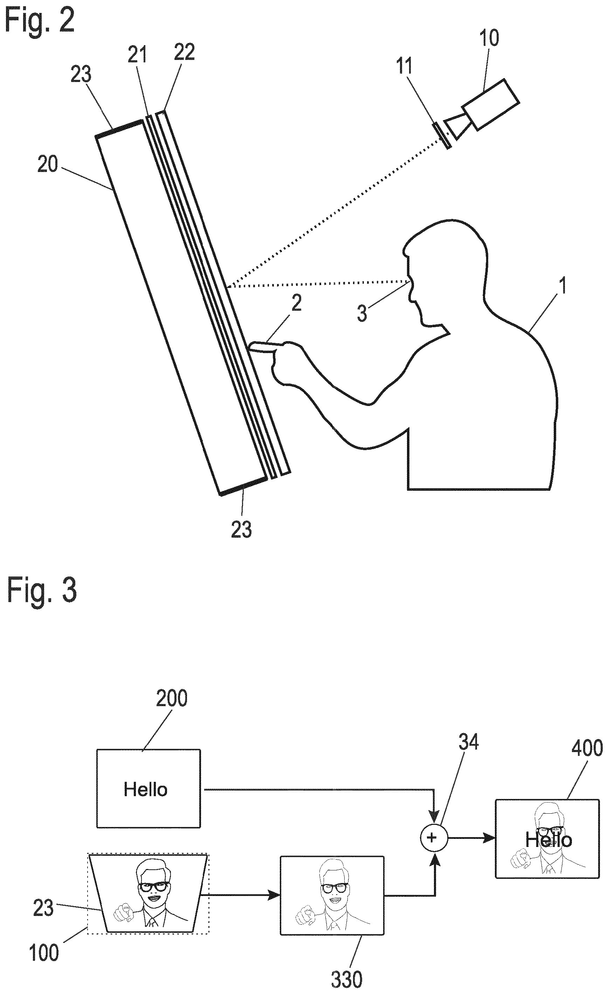

In Fig. 1 ist ein Ausführungsbeispiel eines anmeldungsgemäßen Präsentationssystems in Form eines schematischen Blockdiagramms dargestellt. Fig. 2 zeigt die geometrische Anordnung von Teilen des Präsentationssystems relativ zueinander und in Relation zu einem Vortragenden, der das Präsentationssystem nutzt.

Das Präsentationssystem umfasst eine Videokamera 10 (nachfolgend auch als Kamera 10 bezeichnet), vor deren Optik ein Polfilter 11 angeordnet ist. Weiter umfasst das Präsentationssystem einen Monitor 20, auf dessen Display (d.h. Darstellungsfläche) eine Polfilterfolie 21 als Polarisator und ein teildurchlässiger Spiegel 22 aufgesetzt sind. Die Videokamera 10 ist im dargestellten Ausführungsbeispiel eine Infrarotkamera, deren Empfindlichkeit bei Wellenlängen im Infrarotbereich größer ist als im sichtbaren Bereich.

Die Polfilterfolie 21 und der teildurchlässige Spiegel 22 sind ebenso wie die Darstellungsfläche des Monitors 20 plan.

Wie nachfolgend noch näher erläutert wird, kann auf die Polfilterfolie 21 verzichtet werden, falls der Monitor 20 von sich aus polarisiertes Licht abgibt. In der Regel geben hintergrundbeleuchtete LCD (Liquid Cristal Display)- Monitore polarisiertes Licht ab. Falls der Monitor 20 auf Basis einer selbstleuchtenden Technologie, beispielsweise mit (ggf. organischen) Leuchtdioden aufgebaut ist, wird dagegen die Polfilterfolie 21 vorteilhaft eingesetzt.

Der teildurchlässige Spiegel 22 kann separat auf das Display des Monitors 20 aufgesetzt sein, es kann sich aber bei dem teildurchlässigen Spiegel 22 auch um eine integrale Komponente des Monitors 20 handeln. Maßgeblich ist, dass sowohl Licht durch den teildurchlässigen Spiegel 22 treten kann, als auch ein Teil des von vorne auf dem teildurchlässigen Spiegel 22 auftreffenden Lichts reflektiert wird.

Fig. 2 zeigt die Anordnung der Kamera 10 und des Monitors 20 zueinander und relativ zu einem Vortragenden 1, der das Präsentationssystem nutzt. Dieser befindet sich vorteilhafter Weise mittig vor dem Monitor 20, so dass er ein vom Monitor 20 ausgegebenes Bild betrachten kann. Die Kamera 10 ist oberhalb des Vortragenden 1 geneigt angeordnet, derart, dass ein Bild des Vortragenden 1, das vom teildurchlässigen Spiegel 22 gespiegelt wird, von der Kamera 10 erfasst wird. Im Rahmen der Anwendung ist unter einem "Vortragen" jeder Benutzer eines Präsentationssystems zu verstehen, gleich zu welchem Zweck das Präsentationssystem genutzt wird. In dem Sinne sind auch Videokonferenzteilnehmer oder Moderatoren als "Vortragende" anzusehen. Der dargestellte Betrachtungswinkel, unter dem der Vortragende 1 auf den Monitor 20 blickt, ist dabei variabel, solang die Kamera 10 so angeordnet und ausgerichtet werden kann, dass sie das vom teildurchlässigen Spiegel 22 gespiegelte Bild des Vortragenden 1 erfassen kann. Ein wahlweise dunkler Hintergrund hinter der Kamera 10 vermindert die Reflektionen auf dem Monitor 20 für den Vortragenden 1 und erleichtert so das Ablesen.

Wie wiederum in Fig. 1 zu sehen ist, sind sowohl die Kamera 10 als auch der Monitor 20 mit einem Steuerungsrechner 30 verbunden. Der Steuerungsrechner 30 umfasst einen Monitorbildgenerator 31, beispielsweise ein Präsentationsprogramm, das Bilder ("Folien") für einen Vortrag bereitstellt. Diese werden an eine erste Grafikeinheit 32 (auch Grafikkarte genannt) weitergeleitet, die mit dem Monitor 20 verbunden ist und ein von dem Monitorbildgenerator 31 ausgegebenes Bild auf dem Monitor 20 darstellt. Fig. 3 zeigt schematisch ein solches Monitorbild 200, das vom Monitor 20 ausgegeben wird. In der Fig. 1 ist das Monitorbild 200 in Form von Daten, die von dem Monitorbildgenerator 31 ausgegeben werden, symbolisiert.

Der Vortragende 1 sieht das Monitorbild 200 auf dem Monitor 20 vor sich und kann mit Fingern 2 auf Elemente des Monitorbildes 200 zeigen oder seine Augen 3 auf Abschnitte des Monitorbilds 200 richten.

Währenddessen wird der Vortragende 1 von der Kamera 10 erfasst, die in Echtzeit ein Kamerabild 100 ausgibt. Dieses ist ebenfalls in Fig. 3 wiedergegeben. In der Fig. 1 ist das Kamerabild 100 wiederum in Form von Daten, die von der Kamera 10 an den Steuerungsrechner 30 gesendet werden, symbolisiert.

Aufgrund der Anordnung der Kamera 10 schräg zum Monitor 20 und zum teildurchlässigen Spiegel 22 sind im Kamerabilds 100 wiedergegebene Ränder 23 des Monitors 20 z.B. in Art eines Trapezes verzerrt. Vom teildurchlässigen Spiegel 22 gespiegelte Anteile des Kamerabilds 100 sind jedoch aufgrund der physikalischen Natur der Spiegelung nicht verzerrt. Das Kamerabild 100 kann zudem einen größeren Ausschnitt umfassen als vom teildurchlässigen Spiegel 22 gespiegelt wird.

Durch Verwendung einer Infrarotkamera als Videokamera 10 ist im Kamerabild 100 das Monitorbild ausgeblendet. Ein optimaler Eindruck für den Betrachter des Monitors 20 - auch im Dunkeln - lässt sich durch Kombination der Infrarotkamera mit einer Infrarotausleuchtung der Szene erreichen und ggf. zusätzlich einer Bildschirmfolie auf dem Monitor 20, welche bevorzugt Infrarotstrahlung reflektiert, für das sichtbare Licht jedoch durchlässig ist.

Durch die Verwendung der Infrarotkamera als Videokamera 10 kann der Vortragende 1 und seine Umgebung ausreichend ausgeleuchtet werden, ohne dass der Vortragende 1 durch die Lichtquellen selbst oder durch Spiegelungen der Lichtquellen oder der ausgeleuchteten Umgebung auf dem Monitor gestört wird. Ein Farbeindruck des Kamerabildes 100 lässt sich dann durch Verwendung einer weiteren Kamera erreichen, die ggf. mit geringerer Pixelauflösung ein Echtfarbenbild erstellt. Dieses Echtfarbenbild kann für eine simultane Farbeinfärbung des Monitorbilds 200 genutzt werden, beispielsweise unter Verwendung von künstlicher Intelligenz. Auch ein statisches Farbbild des Vortragenden 1 kann als Farbvorlage für die Einfärbung des Kamerabildes 100 dienen.

Fokussiert ist die Kamera auf den Vortragenden 1. Das hat zur Folge, dass Elemente in der Ebene des teildurchlässigen Spiegels 22 von der Kamera 10 nicht scharf erfasst werden können, da der Tiefenschärfebereich der Kamera 10 bei einer normalen Umgebungsbeleuchtung in der Regel nicht so weit reicht. Es ist daher vorteilhaft, wenn die Kamera 10 das Bild des Monitors 20 möglichst nicht aufnimmt, da dieses nur unscharf dargestellt werden würde.

Um das Monitorbild 200 nicht in die Kamera 10 gelangen zu lassen, ist in dem dargestellten Beispiel zusätzlich der Polfilter 11 vor der Kamera 10 angeordnet. Er wird so eingestellt, dass vom Monitor 20 emittiertes Licht, das inhärent oder aufgrund der vorgesetzten Polfilterfolie 22 polarisiert ist, die Kamera 10 nicht erreicht, sondern von dem Polfilter 11 ausgeblendet wird. Aus diesem Grund ist das Monitorbild 200, das der Vortragende 1 sieht, im Kamerabild 100 weiter unterdrückt. Wenn die Polfilterfolie 22 beispielsweise linear polarisiert, wird der Polfilter 11 so ausgerichtet, dass die Polfilterfolie 22 und der Polfilter 11 gekreuzt zueinander stehende Polarisationseben aufweisen.

In einer Weiterbildung dieser Anordnung kann eine reflexive Polarisationsfolie eingesetzt werden, welche die Eigenschaften der Polfilterfolie 22 und des teildurchlässigen Spiegels 22 mit minimalen Verlusten kombiniert und entsprechend sowohl die Polfilterfolie 22 als auch den teildurchlässigen Spiegel 22 bildet.

Anstelle einer Kombination aus Polfilter 11 und Polfilterfolie 22 kann zum Ausblenden des Monitorbildes 200 aus dem Kamerabild 100 auch ein auf das Display aufgebrachter winkelabhängiger Transmissionsfilter, auch Blickwinkelfilter genannt, eingesetzt werden.

Ebenfalls zusätzlich kann ein Monitor 20 eingesetzt werden, der schmalbandige Farbemitter aufweist, für deren Wellenlänge die Kamera 10 möglichst unempfindlich ist bzw. durch entsprechende Vorfilter unempfindlich gemacht wird.

Auch ist eine zusätzliche Unterdrückung des Monitorbildes 200 in einer Zeitdomäne möglich, beispielsweise indem die Darstellungen auf dem Monitor 20 stroboskopisch erfolgen z.B. über einen schaltbaren Spiegel. Während der Zeiten, in denen das Monitorbild 200 sichtbar ist, wird die Kamera 10 elektrisch durch einen elektronischen Kameraverschluss ausgetaktet, oder es wird das Monitorbild 200 durch einen schaltbaren Transmissionsfilter, der vor der Kamera 10 angeordnet ist, optisch ausgeblendet.

Die Kamera 10 ist innerhalb des Steuerungsrechners 30 mit einer Bildverarbeitungseinheit 33 verbunden, die in Echtzeit eine Transformation des Kamerabildes 100 vornimmt, mit der z.B. die aufgrund der Anordnung der Kamera 10 entstandenen trapezförmige Verzerrung des Rands 23 des Monitors 20 kompensiert werden (vgl. Fig. 3). Dieses ist insbesondere relevant, um das Kamerabild 100 mit dem Monitorbild 200 so zu überlagern, dass im Ausgabebild 400 die beiden Bilder deckungsgleich sind und die Betrachter des Ausgabebildes 400 erfassen können, auf welchen Punkt im Monitorbild 200 der Vortragende 1 tatsächlich schaut oder zeigt.

Alternativ oder zusätzlich zur Modifikation des Kamerabildes 100 kann auch die Wiedergabe des Monitorbilds 200 auf dem Monitor 20 für den Vortragenden 1 so vorverzerrt werden, so dass sich wiederum eine Deckungsgleichheit der beiden Bilder auf dem Ausgabebild 400 ergibt.

Es wird angemerkt, dass diese Modifikation von Kamerabild 100 und/oder Wiedergabe des Monitorbildes 200 auf dem Monitor 20 auch bei Präsentationssystemen eingesetzt werden kann, bei denen eine Separation des Bildes des Vortragenden im Kamerabild 100 nicht durch Verwendung einer Infrarotkamera erfolgt, sondern z.B. durch Dunkeltastung des Monitors 20 in den Aufnahmephasen der Kamera.

Optional kann zusätzlich eine Randbeschneidung bzw. Ausschnittvergrößerung und/oder eine Positionskorrektur und/oder Rotationskorrektur und/oder Spiegelung vorgenommen werden. Die Bildverarbeitungseinheit 33 gibt entsprechend ein modifiziertes Kamerabild 330 aus, wie in Fig. 3 zu sehen ist. Die zuvor genannte simultane Farbeinfärbung kann ebenfalls in der Bildverarbeitungseinheit 33 vorgenommen werden.

Der Steuerungsrechner 30 umfasst weiter eine zweite Grafikeinheit 35 (i.e. eine weitere Grafikkarte), der über einen Mischer 34 sowohl das Monitorbild 200, als auch das modifizierte Kamerabild 330 zugeführt werden. Der Mischer 34 überlagert die beiden Bilder, ggf. mit einstellbarem Helligkeits- und/oder Transparenzgrad. Verbunden mit der zweiten Grafikeinheit 35 ist ein Wiedergabesystem 40, auf dem die Überlagerung des Monitorbildes 200 und des modifizierten Kamerabildes 330 als Ausgabebild 400 dargestellt werden.

Im Fall einer Vorlesung oder eines Vortrags kann das Wiedergabesystem 40 beispielsweise ein Projektionssystem (Beamer) sein, welches das Ausgabebild 400 auf einer Projektionsfläche hinter den Vortragenden 1 darstellt. Die zweite Grafikeinheit 35 kann zusätzlich oder alternativ auch dazu ausgebildet sein, das Ausgabebild 400 in einem Datenformat zu übertragen ("streamen") oder zu speichern.

Das gezeigte Präsentationssystem bzw. das in Zusammenhang mit Fig. 3 erläuterte Präsentationsverfahren bietet den Vorteil, dass der Vortragende 1 das Monitorbild 200 betrachten kann und dennoch eine Frontalaufnahme des Vortragenden 1 für das Auditorium in dem Ausgabebild 400 präsentiert werden kann. Das Ausgabebild 400 auf dem Wiedergabesystem 40 zeigt zudem das Monitorbild 200, so dass das Wiedergabesystem 40 beide für den Vortrag notwendigen oder interessanten Perspektiven, den Vortragenden der frontal sichtbar ist und das Material, auf dass sich der Vortragende 1 bezieht, in einem Bild vereint.

Wenn der Vortragende 1 bestimmte Punkte oder Bereiche des Monitorbildes 20 mit seinen Augen 3 fixiert oder auf diese mit seinem Finger zeigt, ist die entsprechende Augenbewegung und Ausrichtung bzw. Zeigerichtung auch auf dem Ausgabebild 400 auszumachen. Der Vortragende 1 verhält sich somit in Hinblick auf das Monitorbild 200 vollkommen natürlich, wodurch es dem Auditorium leicht fällt nachzuvollziehen, worauf sich der Fokus des Vortragenden 1 gerade richtet.

In einer Weiterbildung des dargestellten Präsentationssystems kann der teildurchlässige Spiegel 22 mit einer berührungsempfindlichen Oberfläche versehen sein und somit als ein Eingabeelement für den Steuerungsrechner 30 dienen. Bevorzugt ist eine kapazitiv arbeitende berührungsempfindliche Oberfläche vorgesehen, die mit dem Finger 2 oder einem hier nicht gezeigten digitalen Eingabestift bedient werden kann.

Bei dieser Ausgestaltung kann der Vortragende 1 mit dem Finger in Art eines Touchscreens den Monitor 20 bedienen bzw. bei Verwendung eines entsprechenden interaktiven Programms das Monitorbild 200 beeinflussen. Das Präsentationssystem kann dann in Art einer Tafel verwendet werden, indem der Vortragende 1 Markierungen setzt oder mit Hilfe des digitalen Eingabestifts auf dem teildurchlässigen Spiegel und damit auf dem Monitor 20 schreibt. Das Auditorium sieht auf dem Wiedergabemonitor 40 das entstehende "Tafelbild" und gleichzeitig den Vortragenden in einer Frontalansicht.

In einer weiteren Modifikation des in den Fig. 1 und 2 dargestellten Präsentationsystems kann die Kamera 10 dynamisch entweder direkt oder über Spiegel bewegt werden um einen optimalen Bildeindruck zu erhalten, auch wenn die Person sich nicht mittig vor dem Bildschirm befindet.

In einer weiteren Modifikation des Präsentationsystems kann die Kamera 10 auch mehrfach realisiert werden und z.B. seitlich angebracht werden und jeweils den Vortragenden 1 über Reflexion am Monitor 20 betrachten. Bilder der Mehrzahl von Kameras 10 können zu einem Bild zusammengefügt werden, das dann von einer "virtuellen" Kamera zu stammen scheint. Eine solche virtuelle Kamera kann mittels z.B. dreidimensionaler Umrechnungen an Positionen gebracht werden, die sonst nicht zugänglich wären. Die Option ist auch im Zusammenhang mit mehreren, beispielsweise zwei Kameras 10 möglich, die als Infrarotkameras ausgebildet sind. Bilder dieser Kameras 10 werden dann bevorzugt zunächst zu einem Bild einer virtuellen Kamera kombiniert, welches dann auf der Basis von Farbinformationen einer zusätzlichen Echtfarben-Kamera eingefärbt wird.

In einer weiteren Modifikation des in den Fig. 1 und 2 dargestellten Präsentationsystems kann durch mindestens einen zusätzlichen Spiegel, der zwischen der Kamera 10 und dem teildurchlässigen Spiegel 22 angeordnet ist, eine größere Flexibilität in der Positionierung der Kamera 10 erreicht werden. Diese Spiegel können insbesondere auch transparent für das sichtbare Licht sein, um weniger störend zu sein.

Beispielsweise ist es möglich, als Monitor 20 den Monitor eines Laptopcomputers zu verwenden. Laptopcomputer haben häufig oberhalb des Monitors 20 mittig eine Kamera angeordnet, die zum Benutzer des Laptops hin ausgerichtet ist. Mit einem schräggestellten und vom Vortragenden aus vor der Ebene des Monitors 20 und oberhalb des Monitors 20 angeordneten zusätzlichen Spiegel kann ein Bild des Vortragenden gespiegelt am teildurchlässigen Spiegel 22 und dann gespiegelt am zusätzlichen Spiegel von der integrierten Kamera des Laptopcomputers aufgenommen werden. Der zusätzliche Spiegel kann beispielsweise mit einer kleinen Teleskop- oder Schwanenhalshalterung mit Klemmbefestigung auf den oberen Rand des Laptops aufgesetzt werden, wodurch der Laptopcomputer Kamera, Monitor und Steuerungsrechner eines Präsentationssystems darstellt.

In einer weiteren Modifikation des in den Fig. 1 und 2 dargestellten Präsentationsystems kann eine mobile Variante durch Verwendung einer möglich kleinen z.B. drahtlosen Kamera am Körper des Vortragendens realisiert werden, welche den Betrachter wiederum über Reflexion am Monitor, z.B. eines Mobiltelefons oder Tablett-Computers, aufnimmt. Hierbei ist die perspektivische Korrektur in Echtzeit an die unter Umständen veränderliche geometrische Situation anzupassen. Hierzu können z.B. Umrisse des Monitors detektiert werden. Ein geeigneter Winkel zwischen dem Monitor und der Kamera kann manuell oder automatisch mittels z.B. Servomotoren nachgeführt werden.

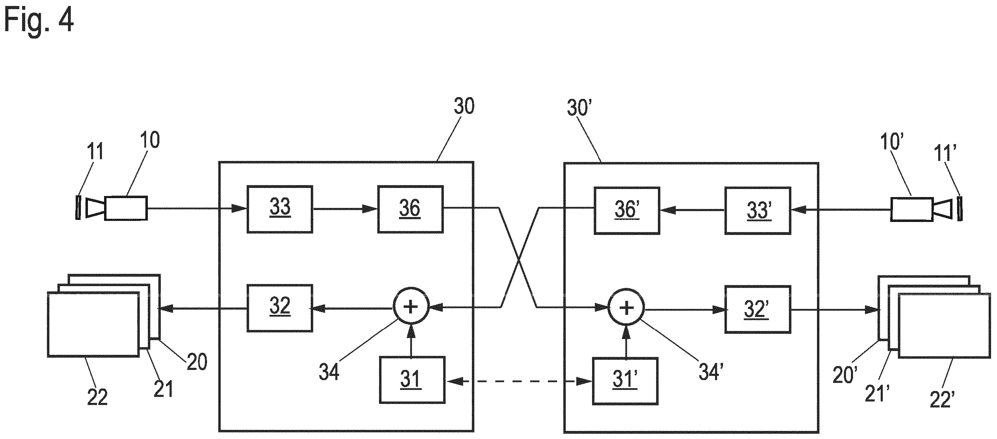

In Fig. 4 ist in einer schematischen Darstellung analog zu Fig. 1 eine Anordnung von zwei ineinander verschränkten Präsentationssystemen dargestellt. Gleiche Bezugszeichen kennzeichnen in dieser Figur gleiche bzw. gleichwirkende Elemente wie in den vorherigen Figuren.

Die Anordnung der Fig. 4 ist als ein Videokonferenzsystem für hier beispielhaft zwei Teilnehmer ausgebildet. Entsprechend sind Komponenten des Präsentationsystems zweifach vorhanden und jeweils einem ersten bzw. einem zweiten Teilnehmer zugeordnet. Die Bezugszeichen von Komponenten, die dem zweiten Teilnehmer zugeordnet sind, sind der einfacheren Unterscheidbarkeit halber mit einem Apostroph versehen.

Die Anordnung umfasst für jeden Teilnehmer eine Kamera 10, 10' mit vorgesetztem Polfilter 11, 11'. Weiter ist für jeden Teilnehmer ein Monitor 20, 20' mit einer Polfilterfolie 21, 21' und einem teildurchlässigen Spiegel 22, 22' vorhanden. Jeder Teil der Anordnung weist weiterhin einen Steuerungsrechner 30, 30' auf, in dem die von der Kamera 10, 10' gelieferten Daten in einer Bildverarbeitungseinheit 33, 33' zu einem modifizierten Kamerabild 330, 330' verarbeitet werden. Bezüglich der geometrischen Anordnung von Kamera 10, 10' und Monitor 20, 20' wird auf die Ausführung zu den Fig. 1 und 2 verwiesen. In jedem der beiden Teile der Anordnung gemäß Fig. 4 nimmt die entsprechende Kamera 10, 10' das Bild eines Vortragenden - in diesem Ausführungsbeispiel Teilnehmer genannt - reflektiert über den Monitor 20, 20' und insbesondere den teildurchlässigen Spiegel 22, 22' auf.

Anders als bei dem zuvor beschriebenen Ausführungsbeispiel wird vorliegend das modifizierte Kamerabild 330, 330' nicht über den Mischer 34 an eine zweite Grafikeinheit 35 übertragen, sondern über eine Netzwerkschnittstelle 36 an einen Mischer 34' des zweiten Teils der Anordnung. Dort wird das modifizierte Kamerabild mit einem Monitorbild 200, das von einem Monitorbildgenerator 31' bereit gestellt wird, der ersten Grafikeinheit 32' zugeführt, die die Überlagerung des Monitorbilds 200 und des modifizierten Kamerabilds 330 auf den Monitor 20' zur Darstellung für den zweiten Teilnehmer überträgt. Der Monitor 20' des zweiten Teilnehmers bildet somit in diesem Ausführungsbeispiel das Wiedergabesystem 40 (vgl. Fig. 1). Es kann der gesamte Teil des Monitors 20, 20' oder jeweils ein Teil davon, z. B. in Form eines Fensters, als Wiedergabesystem eingesetzt werden.

Umgekehrt wird das Kamerabild 100' des zweiten Teilnehmers durch die Bildverarbeitungseinheit 33' entzerrt und über die Netzwerkschnittstelle 36' als modifiziertes Kamerabild 330' des zweiten Teilnehmers an die Steuerungsrechner 30 des ersten Teilnehmers gesendet. Auch hier erfolgt eine Überlagerung in einem Mischer 34 mit dem Monitorbild 200, das von einem Monitorbildgenerator 31 bereitgestellt wird. Die überlagerten Bilder werden über die erste Grafikeinheit 32 auf den Monitor 20 des ersten Teilnehmers ausgegeben. Bevorzugt sind die Monitorbildgeneratoren 31, 31' in beiden Steuerungsrechnern 30, 30' synchronisiert, so dass in beiden Fällen das gleiche Monitorbild 200 zu dem jeweiligen modifizierten Kamerabild 330, 330' gemischt wird. Es sind auf diese Weise zwei ineinander verschränkte Präsentationssysteme gebildet, wobei der Monitor 20, 20' des einen Systems auch als Wiedergabesystem des anderen Systems fungiert.

Durch das beschriebene Verfahren sieht jeder der beiden Teilnehmer auf dem Monitor 20 das Monitorbild 200 und seinen Gesprächspartner, also den jeweils anderen Teilnehmer. Somit können beide Teilnehmer gleichzeitig auf das Monitorbild 200 schauen und dieses ggf., bei Verwendung eines berührungsempfindlichen Monitors 20, 20' bearbeiten. Bei geeigneter Ausrichtung von Kamera 10, 10' bzw. Monitor 20, 20' sehen sich zudem beide Teilnehmer mit Blickkontakt.

Eine Synchronisierung der beiden Monitorbildgeneratoren 31, 31' ist in der Fig. 4 durch einen gestrichelten Pfeil dargestellt. Es versteht sich, dass die somit insgesamt drei dargestellten Verbindungen zwischen den Steuerungsrechnern 30, 30' durch eine einzelne Netzwerkverbindung gebildet sind. Die modifizierten Kamerabilder 330, 330' und die Synchronisationsinformationen für das Monitorbild 200 können dabei jedoch selbstverständlich mit unterschiedlichen Datenraten und Latenzen übertragen werden, um den sich schneller ändernden Kamerabildern 100, 100' Rechnung zu tragen.

Anders als in der Fig. 4 dargestellt, kann eine Mischung des modifizierten Kamerabildes 330, 330' mit dem Monitorbild 200 auch in der jeweiligen Steuerungsrechner 30, 30' erfolgen, bevor eine Übertragung an den jeweils anderen Steuerungsrechner 30, 30' erfolgt.

### Bezugszeichen

- 1: Vortragender
- 2: Finger
- 3: Auge

- 10, 10': Videokamera
- 100: Kamerabild
- 11, 11': Polfilter

- 20, 20': Monitor
- 200: Monitorbild
- 21, 21': Polfilterfolie
- 22, 22': teildurchlässiger Spiegel
- 23: Rand

- 30, 30': Steuerungsrechner
- 31, 31': Monitorbildgenerator
- 32, 32': erste Graphikeinheit
- 33, 33': Bildverarbeitungseinheit
- 330: modifiziertes Kamerabild
- 34, 34': Mischer
- 35: zweite Graphikeinheit
- 36, 36': Netzwerkschnittstelle

- 40: Wiedergabesystem
- 400: Ausgabebild

## Patentansprüche

1. Präsentationssystem zur gemeinsamen Darstellung eines Monitorbilds (200) und eines mit mindestens einer Videokamera (10) aufgenommenen Kamerabilds (100) eines Vortragenden (1) durch ein Wiedergabesystem (40), wobei das Monitorbild (200) und das Kamerabild (100) in einem Mischer (34) zur Darstellung durch das Wiedergabesystem (40) überlagert werden, wobei ein Monitor (20) mit einem Display vorhanden ist, um das Monitorbild (200) für einen sich vor dem Monitor (20) befindenden Vortragenden (1) darzustellen, wobei vor dem Display ein teildurchlässiger Spiegel (22) angeordnet ist, wobei die mindestens eine Videokamera (10) so positioniert ist, dass sie den Vortragenden (1) gespiegelt über den teildurchlässigen Spiegel (22) erfasst, und wobei die mindestens eine Videokamera (10) eine Infrarotkamera ist, **dadurch gekennzeichnet, dass** eine weitere Kamera vorhanden ist, die direkt auf den Vortragenden (1) gerichtet ist, um ein Farbbild des Vortragenden (1) aufzunehmen, wobei das Präsentationssystem dazu eingerichtet ist, anhand des Farbbilds eine Farbeinfärbung des Kamerabilds (100) und/oder des Monitorbilds (200) vorzunehmen.

2. Präsentationssystem nach Anspruch 1, bei dem der teildurchlässige Spiegel (22) parallel zu dem Display flächig auf dieses aufgesetzt ist.

3. Präsentationssystem nach Anspruch 1 oder 2, bei dem der teildurchlässige Spiegel (22) als ein Schutzglas für das Display in den Monitor (20) integriert ist.

4. Präsentationssystem nach einem der Ansprüche 1 bis 3, bei dem der teildurchlässige Spiegel (22) eine berührungsempfindliche Sensoroberfläche aufweist.

5. Präsentationssystem nach einem der Ansprüche 1 bis 4, bei dem vor der mindestens einen Videokamera (10) ein Polfilter angeordnet ist.

6. Präsentationssystem nach Anspruch 5, bei dem zwischen dem Display des Monitors (20) und dem teildurchlässigen Spiegel (22) ein Polarisator angeordnet ist.

7. Präsentationssystem nach Anspruch 6, bei dem der Polarisator eine sich flächig über das gesamte Display erstreckende Polfilterfolie (21) ist.

8. Präsentationssystem nach einem der Ansprüche 1 bis 4, bei dem zwischen dem Display des Monitors (20) und dem teildurchlässigen Spiegel (22) ein Farbfilter oder ein Blickwinkelfilter angeordnet ist.

9. Präsentationssystem nach einem der Ansprüche 1 bis 8, aufweisend einen Steuerungsrechner (30) mit einer Bildverarbeitungseinheit (33), die eine Echtzeit-Bildverarbeitung zur Entzerrung des Kamerabilds (100) ermöglicht, wobei ein modifiziertes Kamerabild (330) an den Mischer (34) weitergeleitet wird.

10. Präsentationssystem nach einem der Ansprüche 1 bis 9, bei dem das modifizierte Kamerabild (330) über ein Netzwerk an einen entfernten Mischer (34') weitergeleitet wird.

11. Präsentationssystem nach Anspruch 10, bei dem der entfernte Mischer (34') mit einem entfernten Monitor (20') verbunden ist, der als Wiedergabesystem (40) fungiert und seinerseits Teil eines weiteren Präsentationssystems ist.

12. Präsentationssystem nach einem der Ansprüche 1 bis 11, bei dem in einem Strahlengang zwischen der mindestens einen Videokamera (10) und dem teildurchlässigen Spiegel (22) mindestens ein weiterer Spiegel angeordnet ist, wobei der Vortragende (1) gespiegelt über den mindestens weiteren Spiegel und über den teildurchlässigen Spiegel (22) von der mindestens einen Videokamera (10) erfasst wird.

13. Präsentationsverfahren zur gemeinsamen Darstellung eines Monitorbilds (200) und eines mit mindestens einer Videokamera (10) aufgenommenen Kamerabilds eines Vortragenden durch ein Wiedergabesystem (40), wobei
- ein Monitor (20) mit einem Display vorhanden ist, auf dem das Monitorbild (200) für einen sich vor dem Monitor (20) befindenden Vortragenden (1) dargestellt wird;
- die mindestens eine Videokamera (10) den Vortragenden (1) gespiegelt über einen vor einem Display des Monitors (20) angeordneten teildurchlässigen Spiegel (22) in einem Kamerabild (100) in einem Infrarot-Wellenlängenbereich erfasst;
- das Kamerabild (100) in Echtzeit durch eine Bildverarbeitungseinheit (33) bearbeitet wird, um ein modifiziertes Kamerabild (330) zu erzeugen und/oder das Monitorbild (200) vor seiner Darstellung auf dem Monitor (20) verzerrt wird;
- das Monitorbild (200) und das modifizierte Kamerabild (330) in einem Mischer (34) zur Darstellung durch das Wiedergabesystem (40) überlagert werden; wobei
- in dem Schritt des Bearbeitens das Kamerabild (100) unter Verwendung eines von einer weiteren Kamera, die direkt auf den Vortragenden (1) gerichtet ist, aufgenommenen Farbbilds des Vortragenden (1) eingefärbt wird.

14. Präsentationsverfahren nach Anspruch 13, bei dem in dem Schritt des Bearbeitens das Kamerabild (100) verzerrt wird und/oder eine Randbeschneidung und/oder eine Ausschnittvergrößerung und/oder eine Positionskorrektur und/oder Rotationskorrektur und/oder Spiegelung erfolgt.

15. Präsentationsverfahren nach Anspruch 13 oder 14, bei dem das Wiedergabesystem (40) einen Monitor (20') eines weiteren Präsentationssystems umfasst.

## Claims

1. A presentation system for the joint display of a monitor image (200) and a camera image (100), which is recorded by at least one video camera (10), of a presenter (1) by a playback system (40), wherein the monitor image (200) and the camera image (100) are superimposed in a mixer (34) for display by the playback system (40), wherein a monitor (20) having a display screen is provided in order to display the monitor image (200) for a presenter (1) located in front of the monitor (20), wherein a partially-transmissive mirror (22) is arranged in front of the display screen, wherein the at least one video camera (10) is positioned to capture the presenter (1) reflected by the partially-transmissive mirror (22), and wherein the at least one video camera (10) is an infrared camera, **characterized in that** a further camera is provided which is directed directly at the presenter (1) to capture a color image of the presenter (1), the presentation system being configured to colorize the camera image (100) and/or the monitor image (200) using the color image.

2. The presentation system according to claim 1, in which the partially-transmissive mirror (22) is placed flatly on the display screen parallel thereto.

3. The presentation system according to claim 1 or 2, in which the partially-transmissive mirror (22) is integrated into the monitor (20) as a protective glass for the display screen.

4. The presentation system according to any one of claims 1 to 3, wherein the partially transmissive mirror (22) includes a touch-sensitive sensor surface.

5. The presentation system according to any one of claims 1 to 4, in which a polarizing filter is arranged in front of the at least one video camera (10).

6. The presentation system according to claim 5, in which a polarizer is arranged between the display screen of the monitor (20) and the partially-transmissive mirror (22).

7. The presentation system according to claim 6, in which the polarizer is a polarizing filter film (21) extending flatly over the entire display screen.

8. The presentation system according to any one of claims 1 to 4, in which a color filter or a viewing angle filter is arranged between the display screen of the monitor (20) and the partially-transmissive mirror (22).

9. The presentation system according to any one of claims 1 to 8, comprising a control computer (30) equipped with an image processing unit (33) that enables real-time processing of images to correct distortion in the camera image (100), wherein a modified camera image (330) is transmitted to the mixer (34).

10. The presentation system according to any one of claims 1 to 9, wherein the modified camera image (330) is relayed over a network to a remote mixer (34').

11. The presentation system according to claim 10, wherein the remote mixer (34') is connected to a remote monitor (20') that functions as a playback system (40) and is part of another presentation system.

12. The presentation system according to any one of claims 1 to 11, wherein at least one additional mirror is arranged in an optical path between the at least one video camera (10) and the partially-transmissive mirror (22), the presenter (1) being captured by the at least one video camera (10) reflected by the at least one additional mirror and by the partially-transmissive mirror (22).

13. A presentation method for the joint display of a monitor image (200) and a camera image of a presenter (1) recorded by at least one video camera (10) by a playback system (40), wherein
- a monitor (20) having a display screen is provided, on which the monitor image (200) is displayed for a presenter (1) located in front of the monitor (20);
- the at least one video camera (10) captures the presenter (1) reflected by a partially-transmissive mirror (22) arranged in front of a display screen of the monitor (20) in a camera image (100) in an infrared wavelength range;
- the camera image (100) is processed in real time by an image processing unit (33) to create a modified camera image (330) and/or the monitor image (200) is distorted before being displayed on the monitor (20);
- the monitor image (200) and the modified camera image (330) are superimposed in a mixer (34) for display by the playback system (40),
- the camera image (100) being colorized in the processing step using a color image of the presenter (1) captured by another camera directed directly at the presenter (1).

14. The presentation method according to claim 13, wherein the camera image (100) is distorted during the processing step and/or cropping and/or enlargement of a portion and/or position correction and/or rotation correction and/or mirroring are performed.

15. The presentation method according to claim 13 or 14, wherein the display system (40) includes a monitor (20') from another presentation system.

## Revendications

1. Système de présentation pour l'affichage simultané par un système de diffusion (40) d'une image de moniteur (200) et d'une image de caméra (100) d'un présentateur (1) captée avec au moins une caméra vidéo (10), dans lequel l'image de moniteur (200) et l'image de caméra (100) sont superposées dans un mélangeur (34) en vue de l'affichage par le système de diffusion (40), dans lequel un moniteur (20) muni d'un écran est prévu pour afficher l'image de moniteur (200) pour un présentateur (1) qui se trouve devant le moniteur (20), dans lequel un miroir semi-transparent (22) est disposé devant l'écran, dans lequel l'au moins une caméra vidéo (10) est positionnée de façon à capter le présentateur (1) réfléchi par le miroir semi-transparent (22) et dans lequel l'au moins une caméra vidéo (10) est une caméra à infrarouge, **caractérisé en ce qu'**il est prévu une autre caméra qui est directement orientée vers le présentateur (1) pour acquérir une image en couleurs du présentateur (1), le système de présentation étant configuré pour réaliser une coloration de l'image de caméra (100) et/ou de l'image de moniteur (200) à l'aide de l'image en couleurs.

2. Système de présentation selon la revendication 1, dans lequel le miroir semi-transparent (22) est posé à plat sur l'écran parallèlement à celui-ci.

3. Système de présentation selon la revendication 1 ou 2, dans lequel le miroir semi-transparent (22) est intégré dans le moniteur (20) sous la forme d'une vitre de protection pour l'écran.

4. Système de présentation selon l'une des revendications 1 à 3, dans lequel le miroir semi-transparent (22) comporte une surface de capteur tactile.

5. Système de présentation selon l'une des revendications 1 à 4, dans lequel un filtre polarisant est disposé devant l'au moins une caméra vidéo (10).

6. Système de présentation selon la revendication 5, dans lequel un polarisateur est disposé entre l'écran du moniteur (20) et le miroir semi-transparent (22).

7. Système de présentation selon la revendication 6, dans lequel le polarisateur est un film de filtre polarisant (21) qui s'étend à plat par-dessus tout l'écran.

8. Système de présentation selon l'une des revendications 1 à 4, dans lequel un filtre coloré ou un filtre de confidentialité est disposé entre l'écran du moniteur (20) et le miroir semi-transparent (22).

9. Système de présentation selon l'une des revendications 1 à 8, comportant un ordinateur de commande (30) muni d'une unité de traitement d'image (33) qui permet un traitement en temps réel des images pour corriger la distorsion de l'image de caméra (100), une image de caméra modifiée (330) étant transmise au mélangeur (34).

10. Système de présentation selon l'une des revendications 1 à 9, dans lequel l'image de caméra modifiée (330) est transmise via un réseau à un mélangeur distant (34').

11. Système de présentation selon la revendication 10, dans lequel le mélangeur distant (34') est connecté à un moniteur distant (20') qui fait office de système de diffusion (40) et qui fait partie d'un autre système de présentation.

12. Système de présentation selon l'une des revendications 1 à 11, dans lequel au moins un autre miroir est disposé sur un trajet optique entre l'au moins une caméra vidéo (10) et le miroir semi-transparent (22), le présentateur (1) étant capté par réflexion sur l'au moins un autre miroir et sur le miroir semi-transparent (22) par l'au moins une caméra vidéo (10).

13. Procédé de présentation pour l'affichage simultané par un système de diffusion (40) d'une image de moniteur (200) et d'une image de caméra d'un présentateur (1) captée avec au moins une caméra vidéo (10), dans lequel
- il est prévu un moniteur (20) muni d'un écran sur lequel l'image de moniteur (200) est affichée pour un présentateur (1) qui se trouve devant le moniteur (20) ;
- l'au moins une caméra vidéo (10) capte le présentateur (1) reflété par un miroir semi-transparent (22) disposé devant un écran du moniteur (20) dans une image de caméra (100) dans une bande de longueurs d'onde infrarouge ;
- l'image de caméra (100) est traitée en temps réel par une unité de traitement d'image (33) pour créer une image de caméra (330) modifiée et/ou l'image de moniteur (200) est distordue avant son affichage sur le moniteur (20) ;
- l'image de moniteur (200) et l'image de caméra modifiée (330) sont superposées dans un mélangeur (34) en vue de l'affichage par le système de diffusion (40),
- l'image de caméra (100) étant colorée dans l'étape de traitement en utilisant une image en couleurs du présentateur (1) captée par une autre caméra orientée directement vers le présentateur (1).

14. Procédé de présentation selon la revendication 13, dans lequel l'image de caméra (100) est distordue au cours de l'étape de traitement et/ou un rognage et/ou un agrandissement d'une partie et/ou une correction de la position et/ou une correction de la rotation et/ou une réflexion en miroir sont réalisées.

15. Procédé de présentation selon la revendication 13 ou 14, dans lequel le système de diffusion (40) comprend un moniteur (20') d'un autre système de présentation.
